# EUROPÄISCHE PATENTANMELDUNG

(11) **EP 0 930 469 A2**
(43) Veröffentlichungstag der Anmeldung: **21.07.1999**
(21) Anmeldenummer: 99100602.4
(22) Anmeldetag: 14.01.1999
(51) Int. Cl.: F24D 3/14

(54) **Heizungsanlage mit mindestens einem Heizelement zur Raumheizung**

(30) Priorität: 15.01.1998 DE 19801165; 06.05.1998 DE 29808088 U
(71) Anmelder: Kälberer, Stefan, 73326 Deggingen (DE)
(72) Erfinder: Kälberer, Stefan, 73326 Deggingen (DE)
(74) Vertreter: Grosse, Rainer, Dipl.-Ing.

(57) **Zusammenfassung**

Es wird eine Heizungsanlage mit mindestens einem Heizelement, das einer mindestens eine Teilwand umfassenden Ständerhohlwand zugeordnet ist, vorgeschlagen. Die Heizungsanlage zeichnet sich insbesondere dadurch aus, daß das Heizelement (3) innerhalb der Ständerhohlwand (59) der Teilwand (63) zugeordnet ist, die beheizt werden soll, und daß das Heizelement (3) mittels einer elastischen Kraft an die Teilwand (63) angedrückt ist.

## Beschreibung

Die Erfindung betrifft eine Heizungsanlage mit mindestens einem Heizelement, das einer mindestens eine Teilwand umfassenden Ständerhohlwand zugeordnet ist.

Es ist bekannt, zur Beheizung eines Raumes Konvektionsheizkörper einzusetzen, die innerhalb des Raumes im Bereich der Außenwand angeordnet sind. Bei einem Konvektionsheizkörper wird die Wärmeenergie durch Lufterhitzung und Luftumwälzung in den Raum eingebracht. Die Raumluft dient hierbei als Wärmeträgermedium. Es hat sich gezeigt, daß die durch Konvektion in den Raum eingebrachte Wärme nicht immer als angenehm empfunden wird. Überdies ist der vom Heizkörper benötigte Raum relativ groß.

Es ist weiterhin eine Heizungsanlage bekannt, mittels derer die Wärmeenergie zum großen Teil mittels Strahlungswärme in den Raum eingebracht wird. Die Heizungsanlage umfaßt in den Fußboden, beispielsweise in Estrich eingebettete Rohrleitungen, die Teil eines Rohrleitungssystems sind, durch das ein Wärmeträgermedium, beispielsweise Heizwasser, geleitet wird. Die Fußbodenheizung hat lange Aufheizzeiten und reagiert träge auf Temperaturschwankungen innerhalb des Raumes. Außerdem ist die Vorlauftemperatur, also die Temperatur, mit der das Wärmeträgermedium in die im Fußboden verlegte Rohrleitung geführt wird, nur in geringen Bereichen variierbar und darf eine bestimmte Zulauftemperatur nicht überschreiten, da ansonsten Wärmespannungen entstehen, die zu Rissen im Estrich oder dem darunterliegenden Betonsockel führen. Ein auf dem Estrich befestigter Fußbodenbelag, beispielsweise Fliesen, können dadurch beschädigt werden. Es ist ferner bekannt, eine derartige Heizungsanlage in einer Wand des Raumes einzubetten, wobei auch hier die gleiche Nachteile wie bei einer Fußbodenheizung auftreten.

Es ist daher Aufgabe der Erfindung, eine Heizungsanlage und ein Verfahren zu schaffen, mittels derer eine beliebige Vorlauftemperatur des Wärmeträgermediums realisierbar ist und ein wohliges Wärmegefühl erzeugt wird.

Zur Lösung dieser Aufgabe wird eine Heizungsanlage mit den Merkmalen des Anspruchs 1 vorgeschlagen. Diese umfaßt mindestens ein Heizelement, das einer Ständerhohlwand zugeordnet ist, die mindestens eine an Ständern befestigte Teilwand umfaßt. Die Heizungsanlage zeichnet sich dadurch aus, daß das Heizelement innerhalb der Ständerhohlwand der Teilwand zugeordnet ist, die beheizt werden soll, und daß das Heizelement mittels einer elastischen Kraft an die Teilwand, das heißt an deren Rückseite, angedrückt ist. Dadurch wird eine gute Wärmeübertragung von dem Heizelement zur Teilwand hin sichergestellt. Die von dem Heizelement der Teilwand zugeführte Wärmeenergie wird verlustarm in Strahlungswärme umgewandelt und in den Raum abgestrahlt. Es hat sich gezeigt, daß durch die Strahlungswärme für den Menschen bereits bei Raumtemperaturen von 18°C bis 19°C ein behagliches Wärmegefühl entsteht. Aufgrund dieser relativ geringen Raumtemperatur können die Heizenergiekosten gegenüber bekannten Heizungsanlagen gesenkt werden. Da die Wärmeenergie durch Strahlung übertragen wird, enthält die Raumluft nur wenig Schwebe- und Staubpartikel, da durch die Übertragung der Wärme mittels Strahlung die Luft nicht umgewälzt wird und damit die Schwebe- und Staubpartikel nicht aufgewirbelt werden, wie bei einer Konvektionsheizung. Besonders vorteilhaft ist ferner, daß durch das elastische Andrücken des Heizelements an die Teilwand dieses vom Wandaufbau, also von der Ständerhohlwand mechanisch entkoppelt ist und daher die Vorlauftemperaturen des Wärmeträgermediums, das dem Heizelement die Wärme zuführt, beziehungsweise die Aufheiztemperaturen des Heizelements in einem großen Bereich variierbar sind. Die Wärmeausdehnung des Heizelements wird also nicht auf die Teilwand übertragen, sondern wird durch die elastische Lagerung des Heizelements kompensiert. Dadurch kann eine Rißbildung in der Teilwand sicher verhindert werden. Durch das elastisch an die Teilwand angedrückte Heizelement kann eine relativ hohe spezifische Heizleistung der Heizungsanlage realisiert werden, die deutlich höher sein kann, als die einer bekannten Heizungsanlage mit einem in der Wand oder im Fußboden eingebetteten Heizelement.

Außerdem wird ein Ausführungsbeispiel der Heizungsanlage bevorzugt, das sich dadurch auszeichnet, daß die elastische Kraft, mit der das Heizelement an die zu beheizende Teilwand der Ständerhohlwand angedrückt wird, von mindestens einem Federelement aufgebracht ist, das vorzugsweise von einer zum Beispiel aus Metall bestehenden Druckfeder gebildet ist. Nach einer weiteren Ausführungsvariante ist vorgesehen, daß das Federelement ein aus Gummi oder einem elastische Eigenschaften aufweisenden Kunststoff bestehendes Federelement ist.

Zur Lösung dieser Aufgabe wird auch eine Heizungsanlage vorgeschlagen, die die Merkmale des Anspruchs 6 aufweist. Diese umfaßt mindestens ein Heizelement, das einer mindestens eine Teilwand umfaßenden Ständerhohlwand zugeordnet ist. Die Heizungsanlage zeichnet sich insbesondere dadurch aus, daß das Heizelement innerhalb der Ständerhohlwand zwischen mindestens zwei Elementen klemmend gehalten ist. Die von dem Heizelement der benachbart angeordneten Teilwand zugeführte Wärmeenergie wird verlustarm in Strahlungswärme umgewandelt und in den Raum abgestrahlt. Durch das klemmende Halten des Heizelements an der Teilwand ist dieses vom Wandaufbau mechanisch entkoppelt, so daß praktisch beliebige Vorlauftemperaturen des Wärmeträgermediums beziehungsweise Aufheiztemperaturen des Heizelements realisierbar sind. Aufgrund des rutschfesten Einklemmens des Heizelements wird die Wärmeausdehnung des Heizelements nicht an die Teilwand übertragen, sondern kompensiert, so daß allenfalls nur kleine Spannungen in der Ständerhohlwand auftreten. Das Heizelement kann sich bei Wärmeausdehnung, vorzugsweise geräuschlos, in der Länge und Breite verändern, ohne daß angrenzende Bauteile, insbesondere die zu beheizende Teilwand, beschädigt werden. Durch die klemmende Halterung ist eine hohe spezifische Heizleistung der Heizungsanlage realisierbar.

Bei einem bevorzugten Ausführungsbeispiel der Heizungsanlage ist vorgesehen, daß ein erstes Element der mindestens zwei Elemente, zwischen denen das Heizelement klemmend gehalten ist, die zu beheizende Teilwand ist. Das Heizelement liegt also unmittelbar an der zu beheizenden Teilwand an, wodurch eine gute Wärmeübertragung von dem Heizelement zur Teilwand hin sichergestellt werden kann. Bei einer bevorzugten Ausführungsvariante ist das zweite Element mindestens eine innerhalb der Ständerhohlwand angeordnete Deckplatte, beispielsweise Rigips- oder Spanplatte. Alternativ ist es möglich, daß das Heizelement zwischen einer Auflattung, das heißt einer vorzugsweise an den Ständern der Ständerhohlwand angebrachten Konterlattung, und vorzugsweise der zu beheizenden Teilwand eingeklemmt ist. Bei einer weiteren Ausführungsvariante ist vorgesehen, daß das Heizelement zwischen zwei Teilwänden der Ständerhohlwand eingeklemmt ist. Es wird deutlich, daß es eine Vielzahl von Möglichkeiten gibt, um das Heizelement innerhalb der Ständerhohlwand zwischen zwei Elementen klemmend zu halten. Wesentlich ist im besonderen, daß mit Hilfe der beiden Elemente so eine kraftschlüssige Fixierung des Heizelements innerhalb der Ständerhohlwand realisiert werden kann, daß eine Wärmeausdehnung des Heizelements nicht zur Beschädigung benachbarter Bauteile führt.

Besonders bevorzugt wird ein Ausführungsbeispiel der Heizungsanlage, das sich dadurch auszeichnet, daß das Heizelement von mindestens einem -vorzugsweise einstückigen- Wärmeleitblech und mindestens einem daran angebrachten Heizungsrohr, insbesondere Heizrohrschlange, gebildet ist. Durch das Heizungsrohr wird ein erwärmtes Wärmeträgermedium, vorzugsweise Wasser oder Dampf, geführt, das das Heizungsrohr erwärmt. Das Heizungsrohr erwärmt wiederum das Wärmeleitblech, das an der zu erwärmenden Teilwand der Ständerhohlwand flächig anliegt. Die Vorlauftemperatur des Wärmeträgermediums, also die Wasser- beziehungsweise Dampftemperatur, ist praktisch beliebig einstellbar, so daß hohe Heizleistungen realisierbar sind.

Das Wärmeleitblech besteht vorzugsweise aus einem nicht magnetischen beziehungsweise nicht magnetisierbaren Material, das zudem eine gute Wärmeleitfähigkeit aufweist, wie zum Beispiel Kupfer oder Messing oder Aluminium. Alternativ ist es möglich, daß das Wärmeleitblech aus verzinktem Stahlblech oder dergleichen besteht. Wichtig ist, daß das Wärmeleitblech eine relativ gute Wärmeleitfähigkeit aufweist und vorzugsweise alterungsbeständig sowie kostengünstig ist.

Weitere vorteilhafte Ausführungsformen der Heizungsanlagen ergeben sich aus den übrigen Unteranspüchen.

Die Aufgabe wird auch durch ein Verfahren mit den Merkmalen des Anspruchs 22 gelöst. Dieses zeichnet sich dadurch aus, daß zur Montage eines Heizelements an einer Ständerhohlwand das Heizelement an mindestens einer zwischen Ständern der Ständerhohlwand angeordneten Haltevorrichtung gehalten wird und in Richtung des zu beheizenden Raumes über eine Seitenfläche der Ständer vor- beziehungsweise übersteht, an denen mindestens eine zu beheizende Teilwand befestigt wird. Bei der Montage der Teilwand wird das sich über mindestens ein Federelement an der Haltevorrichtung abstützende Heizelement zwischen die Ständer zurückgedrückt, wodurch das Heizelement mit einer in Richtung auf die Teilwand gerichteten Kraft beaufschlagt und an diese gedrückt wird. Die Haltevorrichtung und das Heizelement werden also vor Fertigstellung der Ständerhohlwand montiert, wobei die Andrückkraft, mit der das Heizelement an die zu beheizende Teilwand gedrückt wird, erst beim Anbringen der Teilwand an den Ständern aufgebracht wird. Dadurch ist insgesamt eine einfache Montage des Halteelements möglich.

Die Erfindung wird im folgenden anhand der Zeichnung näher erläutert. Dabei zeigen:
- Figur 1: eine Draufsicht auf ein erstes Ausführungsbeispiel eines Heizelements;
- Figur 2: eine Seitenansicht des Heizelements gemäß Figur 1;
- Figur 3: eine perspektivische Darstellung von zwei Teilen eines Ausführungsbeispiels einer Haltevorrichtung;
- Figur 4: eine Explosionsdarstellung weiterer Teile der Haltevorrichtung;
- Figur 5: eine schematische Vorderansicht der Haltevorrichtung im zusammengebauten Zustand;
- Figur 6: eine schematische Draufsicht auf einen Längsschnitt einer Ständerhohlwand mit montierter Haltevorrichtung;
- Figur 7: eine schematische Draufsicht auf den Längsschnitt der Ständerhohlwand mit montiertem Heizelement;
- Figur 8: eine Seitenansicht eines weiteren Ausführungsbeispiels des Heizelements;
- Figuren 9 und 10: weitere Ausführungsbeispiele einer Ständerhohlwand in Draufsicht;
- Figur 11: eine perspektifische Darstellung eines Teils eines weiteren Ausführungsbeispiels des Heizelements;
- Figur 12: einen Querschnitt durch das Heizelement gemäß Figur 11;
- Figuren 13 und 14: jeweils eine Draufsicht und ein Seiten- ansicht weiterer Ausführungsbeispiele des Heizelements und
- Figur 15: einen Ausschnitt eins Raums mit installierten Heizelementen.

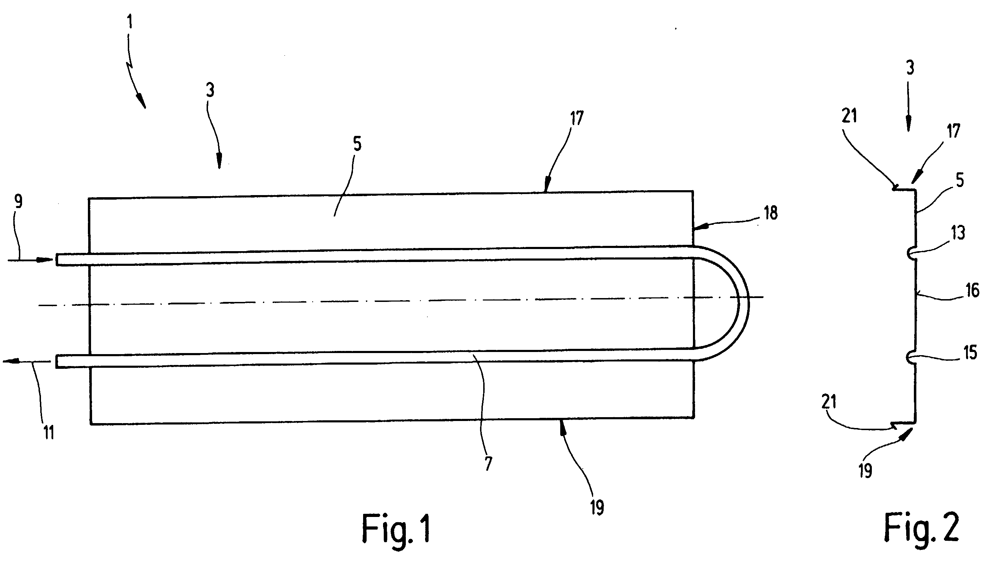

Figur 1 zeigt schematisch eine Draufsicht auf einen Teil einer der Beheizung eines oder mehrerer Räume dienenden Heizungsanlage 1, nämlich ein Ausführungsbeispiel eines auch als Heizkörper bezeichneten Heizelements 3. Dieses wird von einem vorzugsweise aus verzinktem Stahlblech oder aus Messing oder aus Aluminium bestehenden Wärmeleitblech 5 und einem daran angebrachten, vorzugsweise aus Kunststoff oder Kupfer oder Aluminium bestehenden Heizungsrohr 7 gebildet. Durch dieses wird ein Wärmeträgermedium, beispielsweise erwärmtes beziehungsweise heißes Wasser oder Dampf, geführt. Wie mit Pfeilen 9 und 11 angedeutet, wird das Heizungsrohr 7 mit dem Vorlauf und dem Rücklauf des nicht näher dargestellten Rohrnetzes der Heizungsanlage 1 verbunden. Das Wärmeleitblech weist bei diesem Ausführungsbeispiel eine rechteckige Grundform auf.

Im folgenden wird rein beispielhaft davon ausgegangen, daß es sich hier bei der Heizungsanlage 1 um eine an sich bekannte Warmwasserheizung handelt, so daß deren Aufbau nicht weiter beschrieben wird.

Figur 2 zeigt eine Seitenansicht des vorzugsweise einteiligen Wärmeleitblechs 5 des Heizelements 3, das hier zwei gerade, sich über die gesamte Länge des Wärmeleitblechs 5 erstreckende Sicken 13 und 15 aufweist, die bei diesem Ausführungsbeispiel einen im wesentlichen U-förmigen beziehungsweise teilkreisförmigen Querschnitt aufweisen. In die zueinander in einem Abstand angeordneten Sicken 13, 15 wird das in Figur 2 nicht dargestellte U-förmig gebogene Heizungsrohr 7 derart eingeklipst, daß der Bogen des Heizungsrohrs 7 -wie in Figur 1 dargestellt- das Wärmeleitblech 5 überragt und daher nicht an diesem anliegt. Durch das Einklipsen des Heizungsrohrs 7 in die Sicken 13, 15 wird dieses an dem Wärmeleitblech 5 sicher, vorzugsweise rutschfest gehalten, so daß auf weitere Befestigungsmittel verzichtet werden kann. Die Anordnung und der Verlauf der Sicken 13, 15 ist an die Form des Heizungsrohrs 7 angepaßt, das heißt, wenn das Heizungsrohr 7, wie bei einem weiteren -nicht dargestellten- Ausführungsbeispiel vorgesehen, mehrere Biegungen aufweist (Heizrohrschlange), weisen die Sicken einen entsprechenden Verlauf auf. Die Sicken 13, 15 sind vorzugsweise derart tief, daß das darin eingedrückte/eingeklipste Heizungsrohr 7 vollständig aufgenommen wird, also nicht über eine Anlagefläche 16 des Wärmeleitblechs 5, mit der dieses an einer zu beheizenden, nicht dargestellten Teilwand einer Ständerhohlwand anliegt, überragt beziehungsweise nicht über diese vorsteht.

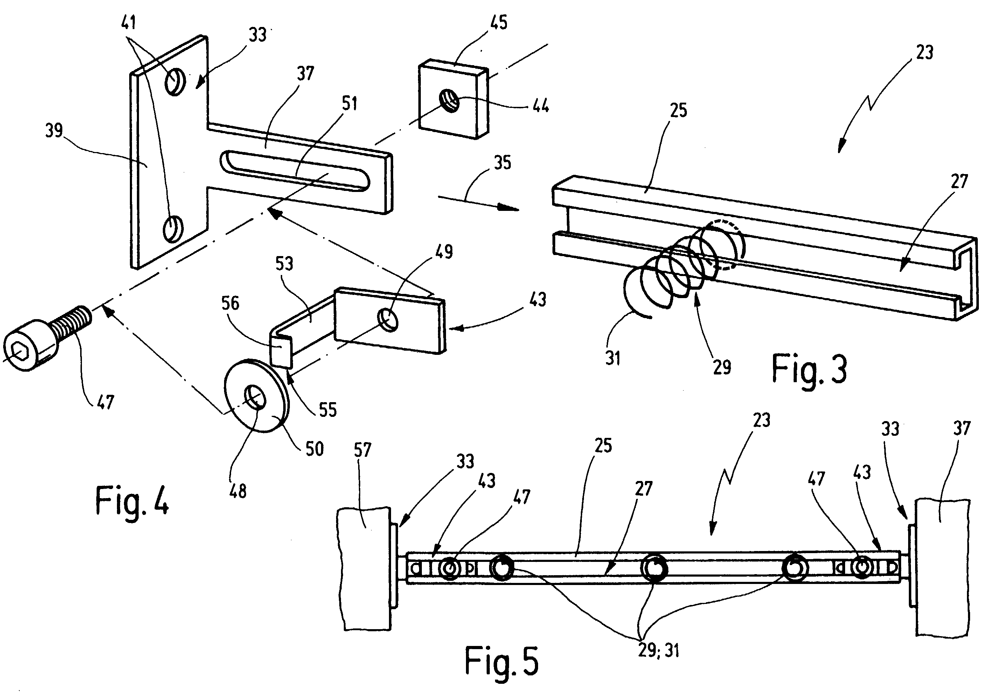

Das beispielsweise eine Dicke von 0,6 mm aufweisende Wärmeleitblech 5 ist an seinen längsseitigen Randbereichen 17 und 19 abgewinkelt und weist jeweils ein schrägstehendes, die Form eines Hakens aufweisendes Ende 21 auf, auf deren Funktion anhand von Figur 4 noch näher eingegangen wird.

Figur 3 zeigt einen Teil einer Haltevorrichtung 23 für das Heizelement 3 in perspektivischer Darstellung, nämlich eine C-förmige Profilschiene 25, die eine durch die C-Form gebildete, sich in Längsrichtung der Profilschiene 25 erstreckende Ausnehmung 27 aufweist, in die mindestens ein Federelement, vorzugsweise drei Federelemente eingebracht beziehungsweise eingedreht und dadurch an der Profilschiene 25 gehalten sind. Von den Federelementen ist in Figur 3 lediglich das Federelement 29 dargestellt, das bei diesem Ausführungsbeispiel von einer Druckfeder 31 gebildet ist.

Figur 4 zeigt in Explosionsdarstellung weitere Teile der Haltevorrichtung 23, nämlich ein Befestigungswinkel 33, der -wie mit einem Pfeil 35 angedeutet- mit einem ersten Schenkel 37 in die Profilschiene 25 der Halteeinrichtung 23 einsteckbar und darin verschieblich geführt ist. An dem zweiten Schenkel 39 des Befestigungswinkels 33 sind Durchgangsöffnungen 41 eingebracht, durch die Befestigungsmittel, beispielsweise Schrauben, hindurchgesteckt und zur Fixierung des Befestigungswinkels 33 und somit der Profilschiene 25 in ein in Figur 4 nicht dargestelltes Bauteil, beispielsweise in einen Ständer einer Ständerhohlwand, eingeschraubt werden. Am ersten Schenkel 37 des Befestigungswinkels 33 wird ein Halteklip 43 mittels einer in eine Gewindebohrung 44 einer Gewindeplatte 45 eingedrehten Schraube 47 gehalten. Diese durchgreift dazu eine Bohrung 48 einer Unterlegscheibe 50, die der Auflage des Kopfes der Schraube 47 dient, eine Bohrung 49 im Halteklip 43 und ein sich zumindest im wesentlichen in Längsrichtung des ersten Schenkels 37 beziehungsweise der Profilschiene 25 erstreckendes Langloch 51 im ersten Schenkel 37 des Befestigungswinkels 33. Dann wird die Schraube 47 in die Gewindebohrung 44 der Gewindeplatte 45 eingedreht. Durch das Langloch 51 ist der Abstand zwischen dem Bauteil, an dem der Befestigungswinkel 33 angebracht ist, und dem Halteklip 43 einstellbar, worauf im folgenden anhand der Figur 5 näher eingegangen wird.

Der Halteklip 43 weist einen Schenkel 53 auf, der im montierten Zustand des Halteklips 43 im wesentlichen senkrecht zu der Seite der Profilschiene 25 steht, auf der sich die Ausnehmung 27 befindet. Das freie Ende 55 des Schenkels 53 ist derart abgewinkelt, daß ein hakenförmiger Abschnitt 56 gebildet wird. Das gegenüber dem Schenkel 53 schräg abstehende Ende 55 beziehungsweise der Abschnitt 56 wird bei der Montage des Heizelements 3 von einem Ende 21 des Wärmeleitblechs 5 hintergriffen und bildet zusammen mit diesem ein Rastmittel.

Figur 5 zeigt die Haltevorrichtung 23 in zusammen- und eingebautem Zustand. An jedem der beiden Enden der Profilschiene 25 ist jeweils ein Befestigungswinkel 33 eingesteckt, die jeweils an einem teilweise dargestellten Ständer 57 einer Ständerhohlwand befestigt sind. An jedem der beiden Befestigungswinkel 33 ist jeweils ein Halteklip 43 für das in Figur 5 nicht dargestellte Heizelement 3 angebracht. Dadurch wird das Heizelement 3 an zwei Seiten, bei dem in Figur 1 dargestellten Ausführungsbeispiel des Heizelements 3 an den Längsseiten an der an den Ständern 57 befestigten Halteeinrichtung 23 gehalten. In die Ausnehmung 27 der Profilschiene 25 sind bei diesem Ausführungsbeispiel drei in einem Abstand voneinander angeordnete Federelemente 29, hier Druckfedern 31, eingedreht. Selbstverständlich können auch mehr als drei Federelemente oder weniger, beispielsweise nur ein oder zwei Federelemente vorgesehen sein. Deren Anzahl ist also variierbar.

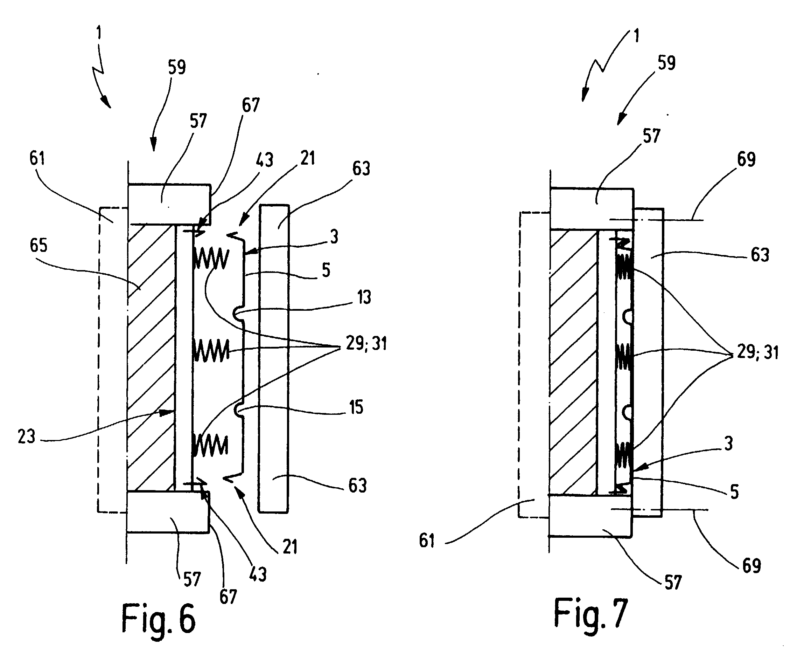

Figur 6 zeigt eine Draufsicht auf eine in Längsrichtung geschnittene Ständerhohlwand 59, von der in Figur 6 lediglich zwei in einem Abstand voneinander angeordnete Ständer 57 dargestellt sind. Die Ständerhohlwand 59 dient beispielsweise zum Abtrennen beziehungsweise Teilen eines Raumes/Zimmers. An den Ständern 57 ist eine mit gestrichelter Linie dargestellte erste Teilwand 61, die beispielsweise von einer Rigipsplatte gebildet ist, mit nicht dargestellten Befestigungsmitteln gehalten. Zwischen den Ständern 57 ist die anhand der Figuren 3 bis 5 beschriebene Haltevorrichtung 23 für das Heizelement 3 derart montiert, daß die an beiden Enden der Profilschiene 25 angebrachten Halteklips 43 einer zu beheizenden, beispielsweise aus Rigips bestehenden zweiten Teilwand 63 der Ständerhohlwand 59 zugewandt sind.

Wie aus Figur 6 ersichtlich, ragen die noch unbelasteten, in der Profilschiene 25 gehaltenen Federelemente 29 über die Seitenfläche 67 der Ständer 57 hinaus, an der die zu beheizende zweite Teilwand 63 befestigt wird.

In dem Zwischenraum zwischen der ersten Teilwand 61 und der Haltevorrichtung 23 ist eine Isolierung 65 eingebracht, wodurch sichergestellt wird, das nur ein gewünschter Abschnitt der Ständerhohlwand 59, hier also die zweite Teilwand 63, mittels des Heizelements 3 erwärmt wird.

Um das Heizelement 3, dessen anhand von Figur 1 beschriebenes Heizungsrohr 7 in den Figuren 6 und 7 nicht dargestellt ist, an der Haltevorrichtung 23 zu befestigen, wird dieses lediglich zwischen die Ständer 57 der Ständerhohlwand 59 entgegen der Federkraft der Federelemente 29 gedrückt, bis die schrägstehenden Enden 21 in den Randbereichen 17, 19 des Wärmeleitbleches 5 das schrägstehende Ende 55 beziehungsweise den hakenförmigen Abschnitt 56 der Halteklips 43 hintergreifen. Durch die durch das Zusammendrücken der Federelemente erzeugte elastische Kraft wird das Heizelement 3 in Richtung der zu beheizenden zweiten Teilwand 63 gedrückt. Dadurch wird zunächst einmal ein Lösen der das Heizelement 3 haltenden Rastmittel, also jeweils ein schrägstehendes Ende 21 des Wärmeleitblechs 5 und ein Halteklip 43, verhindert und vorzugsweise auch das Gewicht des Heizelements 3 gehalten. Die sich an der Profilschiene 25 der Haltevorrichtung 23 abstützenden Federelemente 29 drücken das Heizelement 3 dabei so weit in Richtung des zu beheizenden Raumes, also in der Darstellung gemäß Figur 6 nach rechts, daß das bereits montierte Heizelement 3 die Seitenflächen 67 der Ständer 57 überragt.

Vor der Montage der zweiten Teilwand 63 wird das Heizungsrohr 7 des Heizelements 3 mit dem Rohrnetz für das Wärmeträgermedium, hier Wasser, verbunden, beispielsweise mittels einer Schraub- oder Lötverbindung oder dergleichen. Nun wird die zweite Teilwand 63 der Ständerhohlwand 59 in Kontakt mit dem elastisch gelagerten Heizelement 3 gebracht und dieses entgegen der Federkraft der Federelemente 29 in Richtung der ersten Teilwand 61 in den Zwischenraum zwischen den Ständern 57 gedrückt. Dabei wird das Heizelement 3 in die in Figur 7, die eine Draufsicht auf die zumindest abschnittsweise fertig montierte Ständerhohlwand 59 zeigt, dargestellte Lage verlagert. Die zweite Teilwand 63 wird mittels lediglich angedeuteter Befestigungsmittel 69 an den Ständer 57 befestigt.

Wie aus Figur 7 ersichtlich, liegt das Heizelement 3, das heißt dessen Wärmeleitblech 5 flächig an der zweiten Teilwand 63 der Ständerhohlwand 59 an, wodurch die Wärmeenergie vom in den Figuren 6 und 7 nicht dargestellten Heizungsrohr 7 verlustarm über das Wärmeleitblech 5 an die zweite Teilwand 63 übertragen wird. Dadurch, daß das Heizelement 3 mittels der Federelemente 29 mit definierter elastischer Kraft gegen die zweite Teilwand 63 gedrückt wird, können Wärmeausdehnungen des Heizelements 3 in vorteilhafter Weise ausgeglichen werden. Es ist daher möglich, die Heizungsanlage mit einer relativ hohen Vorlauftemperatur zu betreiben, wodurch sich eine hohe spezifische Heizleistung ergibt, ohne daß durch die Wärmeausdehnung des Heizelements 3 erzeugten Risse in der beheizten Teilwand 63 auftreten.

Das anhand der Figuren 1, 2, 6 und 7 beschriebene Heizelement 3 kann auch von mehreren, beispielsweise zwei oder drei Haltevorrichtungen 23, die in dem Zwischenraum zwischen den Ständern 57 befestigt sind, gehalten werden. Deren Anzahl ist also variierbar.

Dadurch, daß die Haltevorrichtung 23 nur eine geringe Anzahl von Teilen umfaßt, die zudem noch einen einfachen Aufbau aufweisen, kann die Haltevorrichtung 23 einfach und somit kostengünstig hergestellt werden. Durch die in der Profilschiene 25 verschieblich geführten Befestigungswinkel 33 können in vorteilhafter Weise unterschiedlich große Abstände der Ständer 57 zueinander ausgeglichen werden.

Aus allem wird deutlich, daß die sich durch die elastische Anpressung beziehungsweise das elastische Andrücken des Heizelements 3 an die zu beheizende Fläche ergebenen Vorteile sich auch bei einer Fußbodenheizung einstellen. Hierbei werden die Ständer 57 beispielsweise von Dachsparren gebildet und das Heizelement 3 an eine auf diesen befestigte Bodenplatte gepreßt.

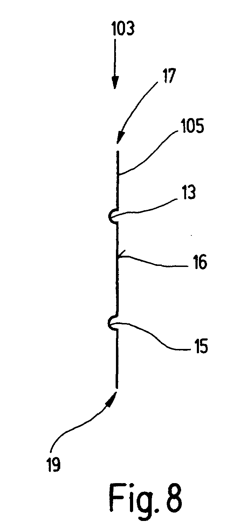

Figur 8 zeigt eine Seitenansicht eines weiteren Ausführungsbeispiels eines Heizelements 103, das sich von dem anhand der vorangegangenen Figuren beschriebenen Heizelement 3 lediglich dadurch unterscheidet, daß die Anlagefläche 16 sowie die längsseitigen Randbereiche 17 und 19 des Wärmeleitblechs 105 des Heizelements 103 eben ausgebildet sind. Das heißt, die Anlagefläche 16 und die der Klemmbefestigung dienenden Wandbereiche 17, 19 liegen in einer gedachten Ebene; der Übergang zwischen der Anlagefläche 16 und den Randbereichen 17, 19 ist also stufenlos.

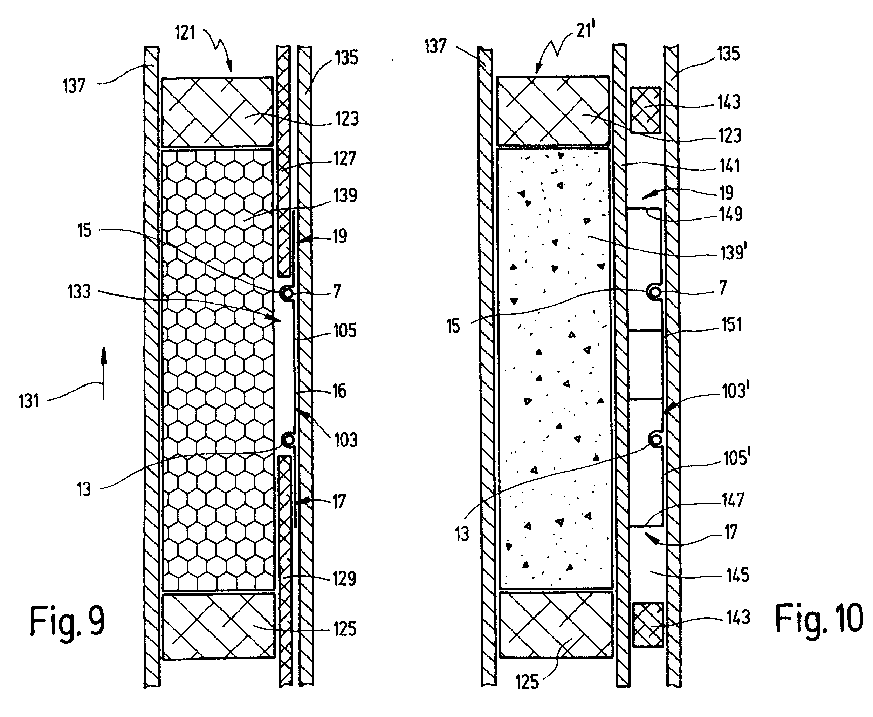

Figur 9 zeigt eine Draufsicht auf eine in Längsrichtung geschnittene Ständerhohlwand 121 in Explosionsdarstellung, von der in Figur 9 lediglich zwei in einem Abstand zueinander angeordnete Ständer 123 und 125 dargestellt sind. Die Ständerhohlwand 121 dient beispielsweise zum Abtrennen beziehungsweise Teilen eines Raumes. Auf der dem zu beheizenden Raum zugewandten Seite des Ständers 123 ist eine Deckplatte 127 und an dem Ständer 125 eine Deckplatte 129 befestigt. Die beispielsweise von jeweils einer 13 mm dicken Spanplatte V-20 gebildeten Deckplatten 127, 129 sind -in Längsrichtung (Pfeil 131) der Ständerhohlwand 121 gesehen- in einem Abstand zueinander angeordnet, wodurch ein Zwischenraum 133 gebildet ist. An den fluchtend angeordneten Deckplatten 127, 129 ist eine erste Teilwand 135 der Ständerhohlwand 121 mit geeigneten -nicht dargestellten- Befestigungsmitteln, beispielsweise Nägel oder Schrauben, befestigt. Das Heizelement 103 ist zwischen den Deckplatten 127 und 129 und der ersten Teilwand 135 klemmend gehalten, worauf im folgenden näher eingegangen wird.

Das Wärmeleitblech 105 ist gegenüber den Deckplatten 127, 129 so positioniert, daß sich die im mittleren Bereich des Wärmeleitblechs 105 vorgesehenen, in einem Abstand zueinander angeordneten Sicken 13, 15 innerhalb des Zwischenraums 133 zwischen den Deckplatten 127, 129 befinden. Dabei liegt das Wärmeleitblech 105 mit seinem längsseitigen Randbereich 17 an der Deckplatte 129 und dem längsseitigen Randbereich 19 an der anderen Deckplatte 127 an. Das Wärmeleitblech 105 ist zwischen den Deckplatten 127, 129 und der ersten Teilwand 135, vorzugsweise rutschfest, eingeklemmt. Aus Figur 9 ist noch ersichtlich, daß das Wärmeleitblech 105 mit der Anlagefläche 16 an der zu beheizenden ersten Teilwand 135 flächig anliegt.

Auf der der ersten Teilwand 135 abgewandten Seite der Ständer 123, 125 der Ständerhohlwand 121 ist eine zweite Teilwand 137 gehalten, die mit nicht dargestellten Befestigungsmitteln, beispielsweise Nägel oder Schrauben, an den Ständern 123, 125 befestigt ist. In dem Zwischenraum zwischen den Teilwänden 135, 137 und den Ständern 123, 125 ist eine Isolierung 139 eingebracht. Durch die Isolierung 139 wird bei dem in Figur 9 dargestellten Ausführungsbeispiel der Ständerhohlwand 121 sichergestellt, daß nur ein gewünschter Abschnitt beziehungsweise Bereich der Ständerhohlwand 121, hier also im wesentlichen nur die erste Teilwand 137, mittels des Heizelements 103 erwärmt wird. Die Isolierung 139 dient des weiteren als Schallschutz.

Die beiden Teilwände 135, 137 werden vorzugsweise von wenigstens einer Gips-Kartonplatte beziehungsweise Gips-Faserplatte gebildet, die beispielsweise eine Dicke von 9 mm bis 13 mm aufweist.

Die anhand von Figur 9 beschriebene Ständerhohlwand 121 ist sowohl zum nachträglichen Einbau in einen bestehenden Raum, als auch aufgrund ihres Aufbaus besonders gut zur Vormontage einer bei der Fertighausherstellung eingesetzten Wand geeignet. Im folgenden wird rein beispielhaft die Montage des Heizelements 103 in einer bei der Fertighausherstellung verwendeten Ausführungsform einer Ständerhohlwand näher erläutert. Zur Befestigung des Heizelements 103 innerhalb der Ständerhohlwand 121 wird das Wärmeleitblech 105 auf die Deckplatten 127, 129 derart aufgelegt, daß die das Heizungsrohr 7 aufnehmenden Sicken 13, 15 im Wärmeleitblech 105 in den Zwischenraum 133 zwischen den fluchtend angeordneten Platten 127, 129 hineinragen. Anschließend wird die erste Teilwand 135 auf das Heizelement 103 beziehungsweise die Deckplatten 127, 129 aufgelegt und vorzugsweise vollautomatisch abgenagelt, das heißt, es werden die erste Teilwand 135 und die Deckplatten 127, 129 durchdringende Nägel in die Ständer 123, 125 der Ständerhohlwand 121 eingebracht. Dabei wird das Heizelement 103 rutschfest zwischen der ersten Teilwand 135 und den Deckplatten 127, 129 eingeklemmt. Die Klemmfestlegung zwischen diesen Elementen ermöglicht einerseits ein sicheres Halten des Heizelements 103 innerhalb der Ständerhohlwand und andererseits eine vorzugsweise geräuschlose Wärmeausdehnung des Heizelements 103 beziehungsweise des Wärmeleitblechs 105 in der Länge und Breite, ohne daß es dabei zu einer Rißbildung in der ersten Teilwand 135 kommt.

Um das in der vormontierten Ständerhohlwand 121 zwischen den Deckplatten und der ersten Teilwand angebrachte Heizelement mit dem Rohrnetz für das Wärmeträgermedium, hier Wasser, der Heizungsanlage zu verbinden, sind an sich bekannte Heizungsrohr-Klemmanschlüsse vorgesehen, so daß beim Aufstellen der Ständerhohlwand gleichzeitig die Verbindung des Heizungsrohres 7 mit dem Vor- und Rücklauf der Heizungsanlage erfolgt.

Bei einem Einbau der Ständerhohlwand in einen bestehenden Raum, also bei einer Vorortmontage, ist es auch möglich, daß das Heizungsrohr 7 beispielsweise mittels einer Schraub- oder Lötverbindung oder dergleichen mit dem Rohrnetz verbunden wird.

Die Montage der Ständerhohlwand erfolgt beispielsweise derart, daß nach dem Aufstellen der Ständer zunächst die zweite Teilwand 137 befestigt und die Isolierung 139 in den Zwischenraum zwischen den Ständern eingebracht wird. Dann werden die Deckplatten 127, 129 montiert und das Heizelement 103 an die Deckplatten in der oben beschriebenen Weise angelegt sowie das Heizungsrohr 7 mit dem Rohrnetz verbunden. Schließlich wird die erste Teilwand 135 an den Deckplatten 127, 129 beziehungsweise an den Ständern 123, 125 befestigt. Dabei wird das Heizelement 103 beziehungsweise das Wärmeleitblech 105 rutschfest innerhalb der Ständerhohlwand 121 kraftschlüssig fixiert. Auf zusätzliche Befestigungsmittel und Halterungen oder dergleichen für das Heizelement 103 kann vorzugsweise verzichtet werden, so daß neben den sich daraus ergebenden wirtschaftlichen Vorteilen auch eine schnelle und einfache Montage möglich ist.

Besonders vorteilhaft bei dem anhand der Figur 9 beschriebenen Ausführungsbeispiel ist, daß dadurch, daß das Wärmeleitblech 105 flächig an der zu beheizenden Teilwand 135 anliegt, die Wärmeenergie des Wärmeträgermediums verlustarm über das Heizungsrohr 7 und das Wärmeleitblech 105 an die erste Teilwand 135 übertragen wird. Durch die Klemmbefestigung des Heizelements 103 an der Ständerhohlwand 121 kann dieses sich bei einer Temperaturänderung vorzugsweise geräuschlos ausdehnen, ohne daß Elemente der Ständerhohlwand beschädigt werden. Es ist daher möglich, die Heizungsanlage mit einer relativ hohen Vorlauftemperatur zu betreiben, wodurch sich eine hohe spezifische Heizleistung ergibt, ohne daß durch die Wärmeausdehnung des Heizelements 103 beispielsweise Risse in der beheizten Teilwand 35 erzeugt werden.

Figur 10 zeigt eine Draufsicht auf eine in Längsrichtung geschnittene weitere Ausführungsform der Ständerhohlwand in Explosionsdarstellung. Gleiche Teile sind mit gleichen Bezugszeichen versehen, so daß insofern auf die Beschreibung zu Figur 9 verwiesen wird. Im folgenden wird lediglich auf die Unterschiede näher eingegangen.

Auf der dem zu beheizenden Raum zugewandten Seite der Ständer 123, 125 der Ständerhohlwand 121' ist nur eine durchgängige, das heißt geschlossene Deckplatte 141 angebracht. Die bei einem bevorzugten Ausführungsbeispiel eine Dampfsperre aufweisende Deckplatte 141, die beispielsweise von einer 18 mm Rigipsplatte gebildet ist, und die Ständer 123, 125 sowie die zweite Teilwand 137 schließen zwischen sich einen Raum ein, in dem eine Isolierung 139', hier eine Schüttisolierung, eingebracht ist. An der Deckplatte 141 ist eine sogenannte Auflattung angebracht, von der in der Darstellung gemäß Figur 10 lediglich Konterlatten 143 dargestellt sind. An der Auflattung wird die zu beheizende erste Teilwand 135 der Ständerhohlwand 121' in geeigneter Weise angebracht. Die erste Teilwand 135, die Konterlatten 143 der Auflattung und die zweite Deckplatte 141 begrenzen einen Installationsbereich 145, in dem ein Heizelement 103' vorgesehen ist.

Das Heizelement 103' umfaßt ein Wärmeleitblech 105', in dessen mittleren Bereich Sicken 13, 15 eingebracht sind, die der Aufnahme des Heizungsrohrs 7 dienen. Die längsseitigen Randbereiche 17 und 19 des Wärmeleitblechs 105' sind derart abgewickelt, daß das Wärmeleitblech 105' einen U-förmigen Querschnitt aufweist. Die Höhe der durch das Abwinkeln in den längsseitigen Randbereichen 17, 19 des Wärmeleitblechs 105' gebildeten Schenkel 147 und 149 ist hier geringfügig größer als die Dicke der Konterlatten 143 der Auflattung, wodurch sichergestellt wird, daß bei der Montage der Ständerhohlwand 121' das Heizelement 103' zwischen der Deckplatte 141 und der ersten Teilwand 135 eingeklemmt wird.

Das Heizelement 103' weist gegenüber dem in Figur 9 dargestellten Heizelement 103 eine größere Breite auf. Um zu verhindern, daß das dünnwandige Wärmeleitblech 105' in seinem mittleren Bereich durchhängt beziehungsweise durchgebogen wird, ist eine Stützbrücke 151 vorgesehen. Diese kann beispielsweise aus dem gleichen Material wie das Wärmeblech 105' hergestellt werden und weist bei dem in Figur 10 dargestellten Ausführungsbeispiel einen U-förmigen Querschnitt auf. Die Höhe der Schenkel der Stützbrücke 151 entspricht im wesentlichen der der Schenkel 147, 149 des Wärmeleitblechs 105'.

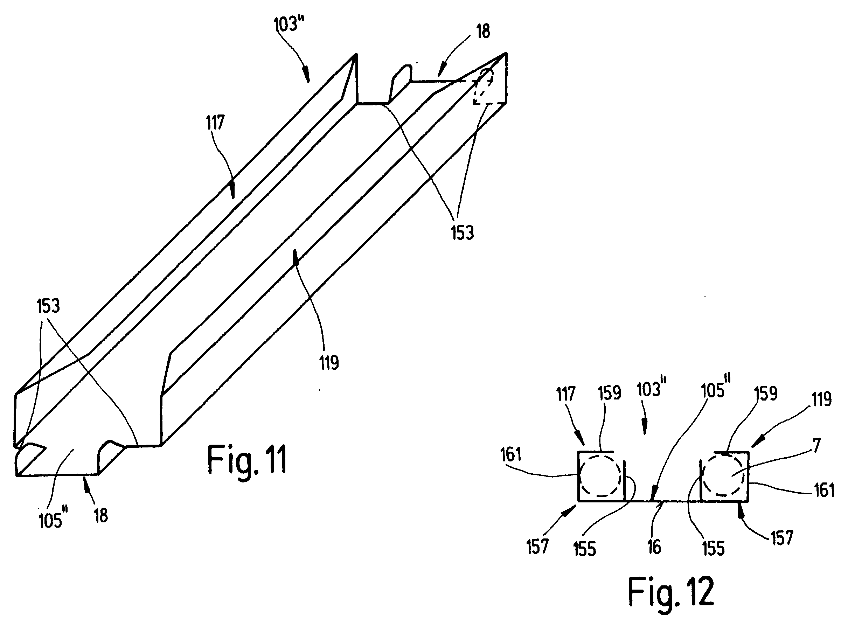

Figur 11 zeigt eine perspektivische Darstellung eines Teils eines Ausführungsbeispiels eines Heizelements 103". Dieses umfaßt ein Wärmeleitblech 105'', das zur Bildung einer rechteckförmigen Aufnahme in seinen längsseitigen Randbereichen 117 und 119 sowie seinen stirnseitigen Randbereichen 18 mehrfach abgekantet beziehungsweise umgebördelt wird, worauf im folgenden anhand von Figur 12 näher eingegangen wird.

In das in Figur 11 dargestellte Wärmeleitblech 105" sind jeweils in einem Abstand von den stirnseitigen Randbereichen 18 quer zur Längserstreckung des Wäremeleitblechs verlaufende Einschnitte 153 eingebracht. Die Ecken in den stirnseitigen Randbereichen 18 werden durch Abkanten derart abgewinkelt, daß sie nach dem Abkanten der längsseitigen Randbereiche 18 entlang der Einschnitte 153 jeweils eine erste Seite 155 einer Aufnahme 157 für das in Figur 11 nicht dargestellte Heizungsrohrs 7 dienen. Die längsseitigen Randbereiche 117, 119 werden derart abgewinkelt, daß sie, wie aus Figur 12 ersichtlich, jeweils eine Oberseite 159 und eine weitere, zweite Seite 161 der Aufnahme 157 bilden. Jeweils ein Teilbereich der Anlagefläche 16, mit der das Wärmeleitblech 105'' vorzugsweise an einer zu beheizenden Teilwand anliegt, bildet die Unterseite für die Aufnahmen 157.

Figur 12 zeigt einen Querschnitt durch das Wärmeleitblech 105'' gemäß Figur 11. Dieses ist -wie anhand von Figur 11 beschrieben- derart in seinen längsseitigen und stirnseitigen Randbereichen 117, 119 beziehungsweise 18 abgewinkelt, daß jeweils zwei Aufnahmen 157 im Bereich der Stirnseiten des Wärmeleitblechs für das mit gestrichelter Linie dargestellte Heizungsrohr 7 gebildet werden.

Aus Figur 12 ist ersichtlich, daß die bei diesem Ausführungsbeispiel rechteckförmigen Aufnahmen 157 also nur durch Abkanten des Wärmeleitblechs 105'' gebildet werden. Die Innenmaße der Aufnahmen 157 können so gewählt werden, daß das Heizungsrohr 7 entweder klemmend gehalten wird oder innerhalb der Aufnahmen 157 verschieblich ist. Das Abkanten des Wärmeleitblechs 105'' stellt also eine vorteilhafte Alternative zur Einbringung von das Heizungsrohr aufnehmenden Sicken in das Wärmeleitblech dar.

Das anhand der Figuren 11 und 12 beschriebene Heizelement 103'' kann im Zusammenhang mit einer anhand der Figuren 9 und 10 beschriebenen Ständerhohlwand eingesetzt werden.

Aus allem wird deutlich, daß die sich durch die klemmende Fixierung des Heizelements 103 beziehungsweise des Wärmeleitblechs 105 zwischen zwei Elementen ergebenden Vorteile sich auch bei einer Fußbodenheizung einstellen. Hierbei werden die Ständer, zwischen denen das Heizelement angeordnet ist, beispielsweise von Dachsparren gebildet und das Heizelement 103 zwischen einer Bodenplatte und mindestens einem zweiten Element eingeklemmmt.

Zusammenfassend bleibt festzuhalten, daß durch das klemmende Halten des Heizelements zwischen zwei Elementen praktisch beliebige Vorlauftemperaturen der Heizungsanlage realsierbar sind, ohne daß Elemente der Ständerhohlwand beschädigt werden. Ein Heizelement, bei dem das Heizungsrohr wie anhand der Figuren 9 bis 12 beschrieben angebracht ist, ist einfach und schnell montierbar. Selbstverständlich ist es alternativ auch möglich, das Heizungsrohr mit Hilfe zusätzlicher Halterungen an dem Wärmeleitblech des Heizelements anzubringen. Hierdurch kann die Herstellung des Wärmeleitblechs vereinfacht werden. Die Grundform des Wärmeleitblechs beziehungsweise die der Anlagefläche 16 ist praktisch beliebig variierbar und kann an die örtlichen Gegebenheiten angepaßt werden.

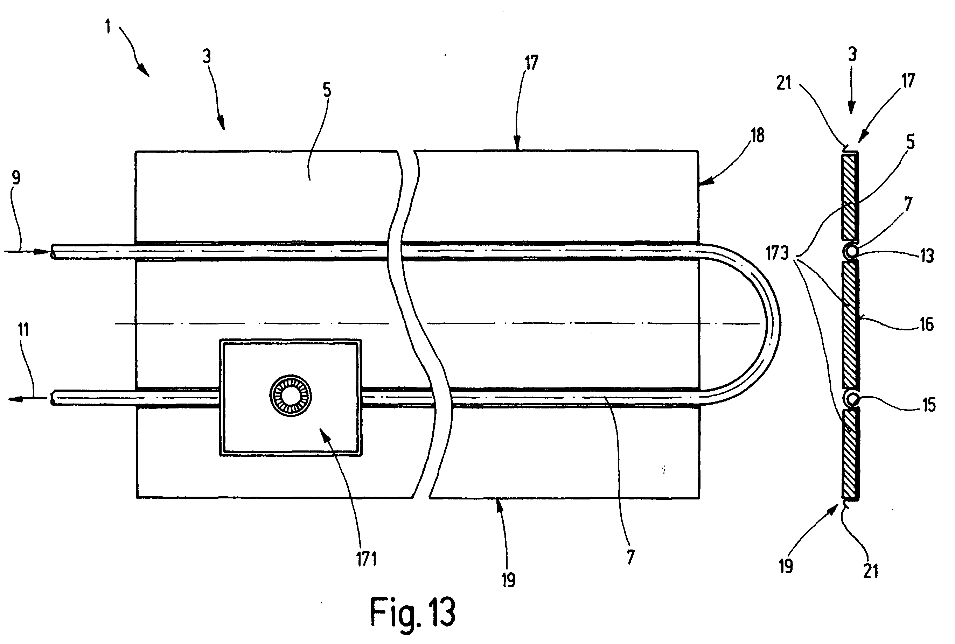

Figur 13 zeigt eine Draufsicht und eine Seitenansicht eines weiteren Ausführungsbeispiels des Heizelements 3. Gleiche Teile sind mit gleichen Bezugszeichen versehen, so daß insofern auf die Beschreibung zu den vorangegangenen Figuren verwiesen wird. In den am Wärmeleitblech 5 angebrachten Abschnitt des Heizungsrohrs 7 ist ein Thermostatventil 171 integriert, dessen Aufbau und Funktion bekannt sind, so daß hier nicht näher darauf eingegangen wird. Das Thermostatventil 171 ist im eingebauten Zustand des Heizelements 3 von dem aus zu beheizenden Raum aus bedienbar. Das Thermostatventil 171 kann über die zu beheizende Teilwand der Ständerhohlwand hinausragen oder in diese integriert sein. Nach einer Ausführungsvariante ist vorgesehen, daß jedes der einem zu beheizenden Raum zugeordneten Heizelemente ein Thermostatventil aufweist.

Auf der dem zu beheizenden Raum abgewandten Seite des Heizelements 3 sind mehrere, hier insgesamt drei Dämmplatten 173 vorgesehen, die mit dem Heizelement 3 beziehungsweise dem Wärmeleitblech 5 zu einer Einheit verbindbar sind und zwar vor der Montage des Heizelements. Die Dämmplatten 173 sind hier klemmend in den Zwischenräumen zwischen dem Randbereich 21 und der Sicke 13, der Sicke 13 und der Sicke 15 beziehungsweise der Sicke 15 und dem Randbereich 21 des Wärmeleitblechs 5 gehalten.

Durch die Dämmplatten 173 wird die Steifigkeit des relativ dünnen Wärmeleitblechs 5 erhöht, wodurch die Handhabbarkeit des Heizelements 3 deutlich verbessert wird und somit dessen Montage vereinfacht ist.

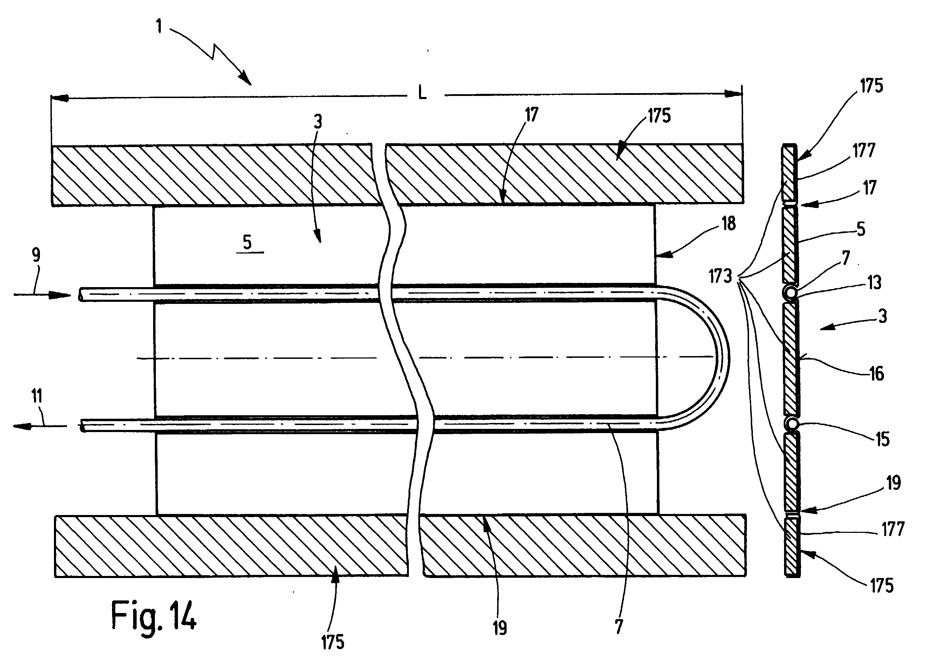

Figur 14 zeigt eine Draufsicht und eine Seitenansicht eines weiteren Ausführungsbeispiels des Heizelements 3, das sich von dem anhand der Figur 13 beschriebenen Heizelement 3 insbesondere dadurch unterscheidet, daß an den längsseitigen Randbereichen 17 und 19 des Wärmeleitblechs 5 jeweils eine Montageleiste 175 befestigt sind, die jeweils einen Ständer der Ständerhohlwand bilden. Bei dem in Figur 14 dargestellten Ausführungsbeispiel bestehen die Montageleisten 175 aus einer zum Beispiel aus Metall bestehenden Leiste 177, die im Querschnitt gesehen ein U-förmiges Profil aufweist, in das eine Dämmplatte 173 eingeklemmt ist. Wie aus Figur 14 ersichtlich sind die Montageleisten 175 in die hakenförmigen Enden 21 des Wärmeleitblechs 5 eingehängt. Die Montageleisten 175, die vor der Montage des Heizelements mit dessen Wärmeleitblech zu einer Einheit verbunden werden können, ermöglichen eine einfache und schnelle Montage des Heizungselements 3 vor Ort.

Bei einem bevorzugten Ausführungsbeispiel ist die Länge L der Montageleisten 175 im wesentlichen gleich groß wie die Höhe der Teilwand, der das Heizelement zugeordnet ist. Bei Betrachtung der Figur 14 wird deutlich, daß die Länge des Wärmeleitblechs 5 kleiner ist, zum Beispiel 50 mm bis 400 mm kleiner ist, als die der Montageleisten 175. Die Länge des mit dem Wärmeleitbleich 5 verbundenen Heizungsrohrs 7 ist vorzugsweise nur geringfügig kleiner als die Höhe der Teilwand, die mit Hilfe des Heizelements 3 erwärmt werden soll.

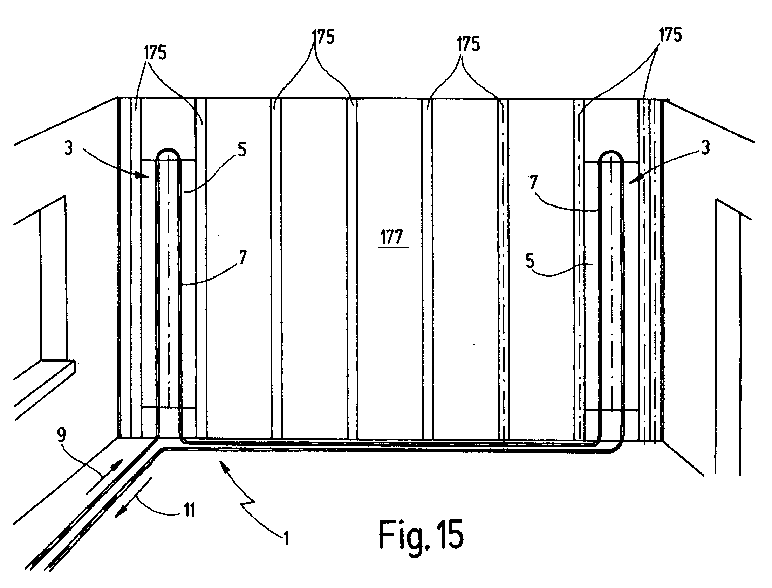

Figur 15 zeigt einen Ausschnitt eines Raumes in perspektifischer Darstellung. An einer Massivwand 177, also einer zum Beispiel aus Beton gegossener oder aus Steinen gemauerten Wand, soll eine Ständerhohlwand aufgebaut werden. Hierzu sind eine Anzahl in einem Abstand voneinander angeordnete Montageleisten 175 an der Massivwand 177 befestigt. An den jeweils äußeren beiden Montageleisten 175 ist jeweils ein anhand der Figur 14 beschriebenes Heizelement 3 angebracht. Die beiden Heizelemente 3 sind mit dem Rohrnetz einer nicht näher dargestellten Heizungsanlage 1 verbunden. Wie aus Figur 15 ersichtlich, ist der Rücklauf des Heizungsrohrs 7 des einen Heizelements 3 mit dem Vorlauf des Heizungsrohrs 7 des anderen Heizelements 3 verbunden. Die Heizelemente 3 sind bei diesem Ausführungsbeispiel also in Reihe verbunden.

An den Montageleisten 175 wird die nicht dargestellte, zu beheizende Teilwand, die beispielsweise durch Gipskartonplatten gebildet ist, in entsprechender Weise befestigt. Wichtig ist, daß die Heizelemente 3 so zwischen den Montageleisten 175 angeordnet sind, daß das jeweilige Wärmeleitblech 5 flächig an der zu beheizenden Teilwand anliegt.

Die die Ständer der Ständerhohlwand bildenden Montageleisten 175 können wie die anhand der Figur 14 beschriebene Montageleisten 175 ausgebildet sein.

Es ist auch möglich, aus Holz und/oder Metall bestehende Montageleisten einzusetzen.

## Patentansprüche

1. Heizungsanlage mit mindestens einem Heizelement, das einer mindestens eine Teilwand umfassenden Ständerhohlwand zugeordnet ist, **dadurch gekennzeichnet,** daß das Heizelement (3) innerhalb der Ständerhohlwand (59) der Teilwand (63) zugeordnet ist, die beheizt werden soll, und daß das Heizelement (3) mittels einer elastischen Kraft an die Teilwand (63) angedrückt ist.

2. Heizungsanlage nach Anspruch 1, **dadurch gekennzeichnet,** daß die elastische Kraft von mindestens einem Federelement (29), insbesondere Druckfeder (31), aufgebracht ist.

3. Heizungsanlage nach einem der vorhergehenden Ansprüche, **dadurch gekennzeichnet,** daß das Heizelement (3) an mindestens einer Haltevorrichtung (23) angebracht ist, die zwischen zwei Ständern (57) der Ständerhohlwand (59) angeordnet ist.

4. Heizungsanlage nach einem der vorhergehenden Ansprüche, **dadurch gekennzeichnet,** daß das Heizelement (3) mittels Rastmittel (55;21) an der Haltevorrichtung (23) befestigt ist.

5. Heizungsanlage nach einem der vorhergehenden Ansprüche, **dadurch gekennzeichnet,** daß die Haltevorrichtung (23) mindestens eine Profilschiene (25), vorzugsweise C-Profilschiene, mit einer sich in Längsrichtung erstreckenden Ausnehmung (27) umfaßt, in die mindestens ein Federelement (29), vorzugsweise drei Federelemente (29) eingebracht ist/sind.

6. Heizungsanlage mit mindestens einem Heizelement, das einer mindestens eine Teilwand umfassenden Ständerhohlwand zugeordnet ist, **dadurch gekennzeichnet,** daß das Heizelement (103;103';103'') innerhalb der Ständerhohlwand (121;121') zwischen mindestens zwei Elementen (erste Teilwand (135), Deckplatte (127,129;141) klemmend gehalten ist.

7. Heizungsanlage nach einem der vorhergehenden Ansprüche, **dadurch gekennzeichnet,** daß ein erstes Element die zu beheizende Teilwand (135) ist.

8. Heizungsanlage nach einem der vorhergehenden Ansprüche, **dadurch gekennzeichnet,** daß ein zweites Element mindestens eine Deckplatte (127,129;141), eine Auflattung oder eine zweite Teilwand (137) der Ständerhohlwand (121;121') ist.

9. Heizungsanlage nach einem der vorhergehenden Ansprüche, **dadurch gekennzeichnet,** daß zumindest die der zu beheizenden Teilwand (135) zugewandten Seitenfläche (Anlagenfläche (16)) des Wärmeleitblechs (105;105';105'') eben oder im wesentlichen eben ist.

10. Heizungsanlage nach einem der vorhergehenden Ansprüche, **dadurch gekennzeichnet,** daß das Wärmeleitblech (5;105'') an seinen längsseitigen Randbereichen (17,19;117,119) abgewinkelt ist.

11. Heizungsanlage nach einem der vorhergehenden Ansprüche, **dadurch gekennzeichnet,** daß zur Festlegung des Heizungsrohrs (7) am vorzugsweise einteiligen Wärmeleitblech (5;105';105'') die längsseitigen und/oder stirnseitigen Randbereiche desselben abgekantet sind.

12. Heizungsanlage nach einem der vorhergehenden Ansprüche, **dadurch gekennzeichnet,** daß durch das Abkanten der Randbereiche eine Aufnahme (157) mit einem zumindest im wesentlichen rechteckförmigen Querschnitt gebildet ist, und daß mindestens eine Seite (155) der Aufnahme (157) von einem Teilbereich des abgekanteten stirnseitigen Randbereichs (18) des Wärmeleitblechs (105) gebildet ist.

13. Heizungsanlage nach einem der vorhergehenden Ansprüche, **dadurch gekennzeichnet,** daß das Heizelement (3;103) von mindestens einem Wärmeleitblech (5,105,105',105'') und mindestens einem daran angebrachten Heizungsrohr (7), insbesondere Heizrohrschlange, gebildet ist.

14. Heizungsanlage nach einem der vorhergehenden Ansprüche, **dadurch gekennzeichnet,** daß das Wärmeleitblech (5,105,105',105'') aus verzinktem Stahlblech oder aus Messing oder aus Aluminium besteht.

15. Heizungsanlage nach einem der vorhergehenden Ansprüche, **dadurch gekennzeichnet,** daß das Heizungsrohr (7) aus Kunststoff oder Kupfer oder Aluminium besteht.

16. Heizungsanlage nach einem der vorhergehenden Ansprüche, **dadurch gekennzeichnet,** daß das Wärmeleitblech (5,105,105') eine oder mehrere Sicken (13,15) aufweist, in die das Heizungsrohr (7) eingeklipst ist.

17. Heizungsanlage nach einem der vorhergehenden Ansprüche, **dadurch gekennzeichnet,** daß eine Isolierung (65) auf der der zu beheizenden Teilwand (63) abgewandten Seite des Heizelements (3) vorgesehen ist.

18. Heizungsanlage nach einem der vorhergehenden Ansprüche, **dadurch gekennzeichnet,** daß in dem am Wärmeleitblech anliegenden Abschnitt des Heizungsorhrs (7) ein Thermostatventil (171) vorgesehen ist.

19. Heizungsanlage nach einem der vorhergehenden Ansprüche, **dadurch gekennzeichnet,** daß vor der Montage des Heizelements das Wärmeleitblech mit mindestens einer Dämmplatte zu einer Einheit verbindbar ist.

20. Heizungsanlage nach einem der vorhergehenden Ansprüche, **dadurch gekennzeichnet,** daß vor der Montage des Heizelements das Wärmeleitblech mit mindestens einem Ständer der Ständerhohlwand zu einer Einheit verbindbar ist.

21. Heizungsanlage nach Anspruch 20, **dadurch gekennzeichnet,** daß der Ständer von einer aus Dämmmaterial, Holz und/oder Metall bestehenden Montageleiste gebildet ist.

22. Verfahren zur Montage eines Heizelements an einer Ständerhohlwand, insbesondere nach Anspruch 1, **dadurch gekennzeichnet,** daß das an mindestens einer zwischen Ständern der Ständerhohlwand angeordneten Haltevorrichtung gehaltene Heizelement über eine Seitenfläche der Ständer vorsteht, an denen mindestens eine zu beheizende Teilwand befestigt wird, und daß bei der Montage der Teilwand das sich über mindestens ein Federelement an der Haltevorrichtung abstützende Heizelement zwischen die Ständer zurückgedrückt wird, so daß das Heizelement mit einer in Richtung auf die Teilwand gerichteten Kraft beaufschlagt und an diese gedrückt wird.
